# FASCICULE DE BREVET EUROPEEN

(11) **EP 4 042 060 B1**
(45) Date de publication et mention de la délivrance du brevet: **30.04.2025**
(21) Numéro de dépôt: 20845166.6
(22) Date de dépôt: 09.12.2020
(51) Int. Cl.: F16L 57/00, B65D 59/06

(54) **SYSTEME DE PROTECTION DE L'EMBOUCHURE D'UNE CANALISATION, ET PROCEDE DE MISE EN OEUVRE D'UN TEL SYSTEME**
SYSTEM ZUM SCHÜTZEN DER MÜNDUNG EINES ROHRES UND VERFAHREN ZUM IMPLEMENTIEREN EINES SOLCHEN SYSTEMS
SYSTEM FOR PROTECTING THE MOUTH OF A PIPE AND METHOD FOR IMPLEMENTING SUCH A SYSTEM

(30) Priorité: 24.01.2020 FR 2000680
(43) Date de publication de la demande: 17.08.2022
(73) Titulaire: Financiere de Beaumont- FDB, 26100 Romans-sur-Isere (FR)
(72) Inventeur: COURBIS, Hervé, 26600 BEAUMONT-MONTEUX (FR)
(74) Mandataire: Cabinet Laurent & Charras
(86) Numéro de dépôt international: PCT/FR2020/052357
(87) Numéro de publication internationale: WO 2021/148730

(56) Documents cités:
- WO-A1-2019/059806
- US-A- 3 080 993
- US-A- 4 081 879
- US-A- 4 777 985
- US-A1- 2012 049 425
- US-A1- 2018 023 749

## Description

### DOMAINE TECHNIQUE

La présente invention concerne un système de protection de l'embouchure d'une canalisation, en particulier du type « I-Tube » pour l'exploitation pétrolière. L'invention concerne également un procédé de mise en œuvre d'un tel système.

### ART ANTERIEUR

Différents systèmes sont connus pour protéger les canalisations contre les corps solides ou les fluides, lors de leur transport ou leur stockage.

US2977993A décrit un exemple de système de protection constitué par un couvercle en matériau plastique, notamment en élastomère, destiné à être agencé à l'extrémité d'une canalisation pour en protéger l'intérieur. Le couvercle comprend une partie centrale fermée, en forme de dôme, pour empêcher la pénétration de poussière, eau ou autres corps étrangers dans la canalisation.

US5004016 décrit un autre exemple de système de protection constitué par une pièce en matériau élastomère, destinée à être agencée à l'extrémité d'un tube pour protéger son filetage. La pièce comprend une jupe destinée à couvrir la surface externe filetée du tube. La pièce est munie d'un crochet pour son enlèvement par l'extérieur. Le crochet est disposé dans un orifice central permettant le passage de fluide à travers la pièce.

Il est également connu le document US4777985 qui décrit le préambule de la revendication 1.

### EXPOSE DE L'INVENTION

Le but de la présente invention est de proposer un système de protection pour les canalisations destinées à être immergées, notamment pour l'exploitation pétrolière par une unité flottante de production, de stockage et de déchargement (FPSO : « Floating Production Storage and Offloading » en anglais), une plateforme à ancrage tendu (TLP : « Tension-leg platform »), ou un complexe flottant pour gaz naturel liquéfié (FLNG : « Floating Liquefied Natural Gas »).

A cet effet, l'invention a pour objet un système de protection de l'embouchure d'une canalisation, conforme à l'objet de la revendication 1.

Ainsi, l'invention permet de protéger l'embouchure de la canalisation contre le fluide et les corps étrangers (eau de mer et organismes marins du type algues, coquillages, etc), tout en offrant la possibilité de retirer la pièce protectrice sélectivement par l'intérieur ou par l'extérieur de la canalisation.

La pièce protectrice est conçue pour résister au transport de la conduite, par exemple connectée à une unité FPSO, susceptible d'être remorquée en mer entre deux continents.

Dans le même temps, la pièce protectrice est conçue pour permettre un retrait non manuel, c'est-à-dire par des moyens mécanisés.

Ce retrait peut être effectué par l'extérieur avec un véhicule sous-marin téléguidé (ROV : « Remoted Operated Underwater Vehicle » en anglais) sous plusieurs mètres d'eau, disposant d'une faible force de traction. Toutefois, une telle opération est coûteuse et complexe. Le retrait par l'extérieur par un plongeur est totalement interdit compte tenu des risques mortels.

De manière particulièrement avantageuse, le retrait peut être effectué par l'intérieur de la canalisation, depuis une unité flottante, une plateforme ou un bateau, à l'aide d'un treuil tirant sur une corde ou sangle fixée à la pièce protectrice. Celle-ci se déforme alors et se replie sur elle-même, de manière à pouvoir remonter le long de la canalisation. Ce mode de retrait est beaucoup plus simple et moins coûteux que l'intervention d'un robot sous-marin.

Selon d'autres caractéristiques avantageuses de l'invention, prises isolément ou en combinaison :
- La pièce protectrice comporte des zones amincies pour faciliter la déformation et le retrait.
- Les zones amincies sont formées sur la partie périphérique.
- Les zones amincies comprennent des lignes réparties dans des plans axiaux sur la partie périphérique.
- Les zones amincies comprennent au moins certains des angles de jonction entre les jupes de la partie périphérique.
- Les zones amincies sont formées sur la partie centrale.
- Les zones amincies comprennent des sections amincies formées sur les rayons de la partie centrale.
- Les rayons ont une section cylindrique.
- Les rayons sont inclinés par rapport à un plan radial de la pièce protectrice.
- La partie périphérique est munie d'au moins trois jupes prévues pour protéger respectivement une surface intérieure, une surface frontale et une surface extérieure de l'embouchure de la conduite.
- La partie périphérique est munie de quatre jupes prévues pour protéger respectivement une surface intérieure, une surface frontale, une surface extérieure et une surface arrière de l'embouchure de la conduite.
- Le système comprend des moyens d'accroche conçus pour accrocher des moyens de traction à la pièce protectrice en vue de son retrait.
- Les moyens d'accroche sont conçus pour accrocher des moyens de traction à la pièce protectrice par-dessus et par-dessous, en vue de son retrait sélectivement par l'intérieur ou par l'extérieur de la canalisation.
- Les moyens d'accroche comprennent une pièce d'ancrage fixée au moyeu de la partie centrale.
- La pièce d'ancrage est en matériau plus dur que la pièce protectrice.
- Les moyens d'accroche comprennent un organe d'ancrage solidaire du moyeu de la partie centrale.
- Les moyens d'accroche comprennent le moyeu de la partie centrale, recevant directement les moyens de traction.
- Les moyens d'accroche comprennent des éléments disposés sur la partie périphérique de la pièce protectrice et prévus pour recevoir les moyens de traction.
- La pièce protectrice est en matériau polyuréthane, de préférence en Courbhane (marque déposée).
- La pièce d'ancrage est en matériau polyuréthane, de préférence en Courbhane (marque déposée), plus dur que le matériau de la pièce protectrice.

L'invention a également pour objet un procédé de mise en œuvre d'un système de protection tel que mentionné ci-dessus, le procédé comprenant une étape de montage de la pièce protectrice sur l'embouchure de la canalisation, et une étape de retrait de la pièce protectrice, sélectivement par l'intérieur ou par l'extérieur de la canalisation.

Lors de l'étape de montage, la pièce protectrice est emmanchée en force sur l'embouchure de la canalisation. Cette opération ne nécessite pas d'outils en contact avec l'embouchure à protéger.

Lors de l'étape de retrait, la pièce protectrice est tirée et déformée de manière à la déchausser de l'embouchure de la canalisation. Pour son retrait par l'intérieur, la pièce est repliée sur elle-même, de sorte que son diamètre extérieur (ou sa plus grande dimension extérieure) devienne inférieur au diamètre intérieur de la canalisation.

### BREVE DESCRIPTION DES DESSINS

L'invention sera mieux comprise à la lecture de la description qui va suivre, donnée uniquement à titre d'exemple non limitatif et faite en référence aux dessins annexés sur lesquels :
[Fig 1] est une vue en perspective éclatée d'un système de protection d'une embouchure de canalisation, montrant ladite embouchure de canalisation, et le système constitué de deux pièces, à savoir une pièce protectrice et une pièce d'accroche.
[Fig 2] est une vue axiale du système sans la canalisation.
[Fig 3] est une coupe transversale du système et de la canalisation, selon la ligne III-III à la figure 2.
[Fig 4] est une vue à plus grande échelle du détail IV à la figure 3, montrant un premier côté de la pièce protectrice.
[Fig 5] est une vue à plus grande échelle du détail V à la figure 3, montrant un second côté de la pièce protectrice.
[Fig 6] est une vue en perspective de la pièce d'accroche.
[Fig 7] est une vue à plus grande échelle du détail VII à la figure 2, montrant la pièce d'accroche.
[Fig 8] est une vue à plus grande échelle du détail VIII à la figure 3, montrant la pièce d'accroche.
[Fig 9] est une vue en perspective et en coupe transversale d'un système de protection conforme à un deuxième mode de réalisation de l'invention.
[Fig 10] est une vue en perspective d'un système de protection conforme à un troisième mode de réalisation de l'invention.

### DESCRIPTION DETAILLEE DE L'INVENTION

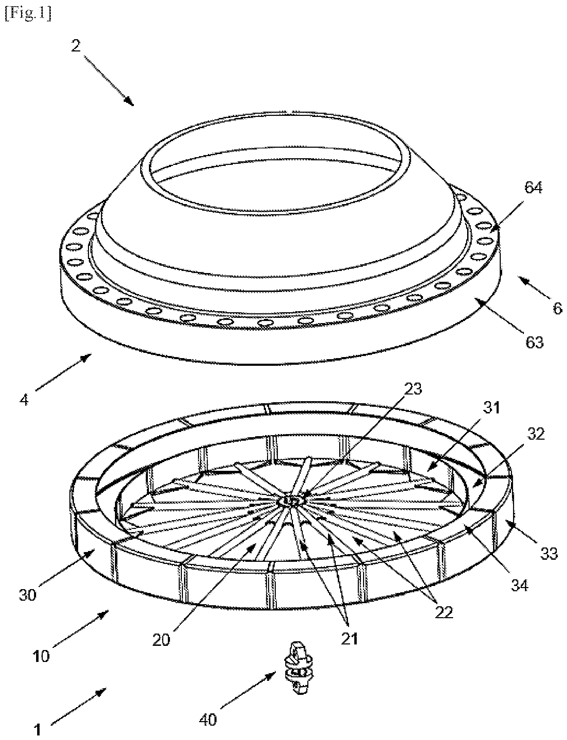

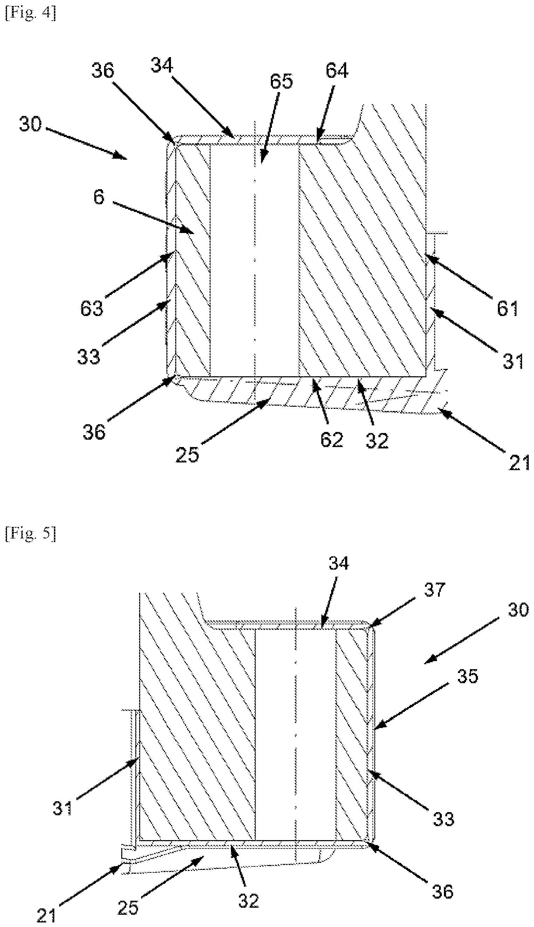

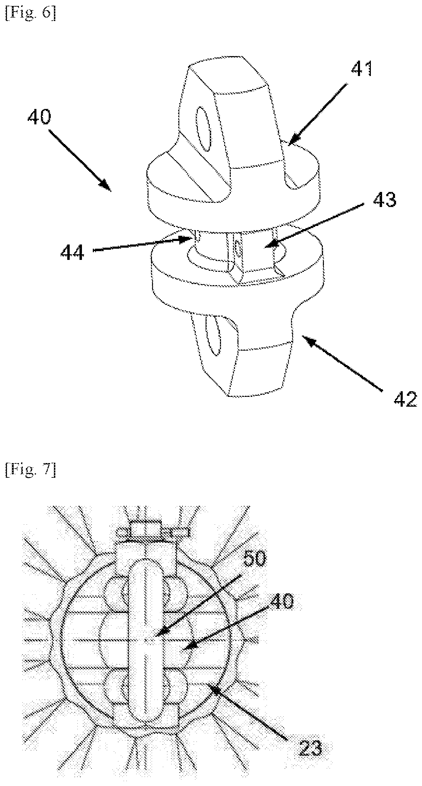

Sur les figures 1 à 8 est représenté un système (1) de protection d'embouchure (4) de canalisation (2).

Sur l'exemple des figures, la canalisation (2) est du type « I-Tube », conçue pour équiper une unité flottante FPSO, une plateforme TLP ou un complexe FLNG. La canalisation (2) comprend un corps tubulaire (3) et une embouchure (4) munie d'une partie tronconique (5) et d'une collerette annulaire (6). A titre indicatif, une unité FPSO peut comporter vingt-quatre canalisations (2) de ce type à protéger.

La collerette (6) forme une bride pour fixer la canalisation (2) à une autre canalisation, par exemple un raidisseur de courbure (« bend stiffener » en anglais) de conduit flexible ou ombilical.

La collerette (6) comporte quatre surfaces (61, 62, 63, 64) dont la protection par le système (1) est souhaitée, à savoir une surface cylindrique intérieure (61), une surface annulaire frontale (62), une surface cylindrique extérieure (63) et une surface annulaire arrière (64). La collerette (6) comporte une pluralité d'alésages (65) traversant ménagé entre la surface frontale (62) et la surface arrière (64).

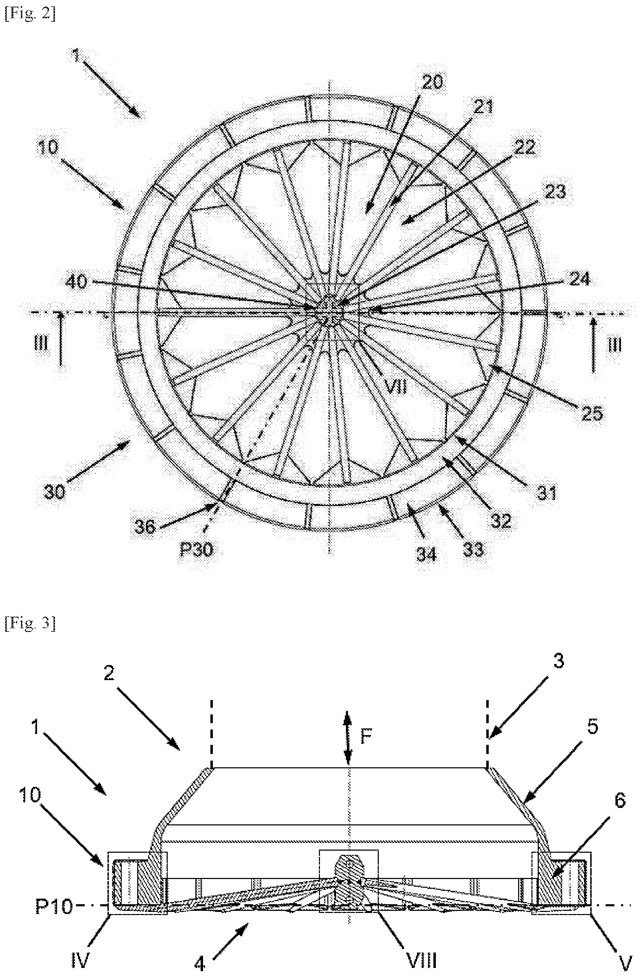

Un fluide (F) circulant dans la canalisation (2) est représenté par une double flèche sur la figure 3. Le fluide (F) est par exemple de l'eau de mer, circulant librement dans un sens ou dans l'autre alors que l'embouchure (4) de la canalisation (2) est immergée, lors de son transport ou sur le site d'exploitation.

Le système (1) comprend une pièce protectrice (10) et une pièce d'ancrage (40). La pièce protectrice (10) comprend une partie centrale (20) et une partie périphérique (30).

La partie centrale (20) a une forme de roue. La partie centrale (20) comprend un ensemble de rayons (21), des ouvertures (22) ménagées entre les rayons (21), et un moyeu central (23). Les ouvertures (22) permettent le passage du fluide (F) à travers le système (1).

Il est évident qu'afin de ne pas gêner le passage du fluide (F) à travers le système (1), la partie centrale (20) ne comporte pas d'élément additionnel tel qu'une membrane venant obturer les ouvertures (22). Les ouvertures (22) de la partie centrale (20) représentent une superficie totale correspondant à au moins 30% de la section de la canalisation (2), et préférentiellement plus de 50%.

Les rayons (21) s'étendent entre le moyeu (23) et la partie périphérique (30). Les rayons (21) ont une section cylindrique, minimisant la résistance hydrodynamique au fluide (F), par rapport à une section plate. Les rayons (21) sont inclinés par rapport à un plan radial (P10) de la pièce (10), minimisant la résistance hydrodynamique au fluide (F), par rapport à des rayons (21) qui seraient tous disposés dans le même plan radial (P10).

La partie centrale (20) comporte une collerette de nervures de rigidification (24) disposés entre les rayons (21), tout autour du moyeu (23). La partie centrale (20) comporte aussi une série d'éléments de rigidification (25) disposés de part et d'autre des rayons (21) et contre la partie périphérique (30). Ces moyens de rigidification (24, 25) permettent de s'assurer que la pièce protectrice (10) ne cède pas lors de son retrait.

La partie périphérique (30) comprend quatre jupes (31, 32, 33, 34) prévues pour protéger quatre surfaces (61, 62, 63, 64) de l'embouchure (4) contre le fluide (F) et les corps étrangers. Plus précisément, la partie périphérique (30) comprend une jupe intérieure cylindrique (31), une jupe annulaire frontale (32), une jupe cylindrique extérieure (33) et une jupe annulaire arrière (34) protégeant respectivement la surface cylindrique intérieure (61), la surface annulaire frontale (62), la surface cylindrique extérieure (63) et la surface annulaire arrière (64) de l'embouchure (4) de la conduite (2). En pratique, la géométrie de la partie périphérique (30) est adaptée à la géométrie de la collerette (6). Les jupes (31-34) recouvrent les surfaces (61-64), de préférence en étant plaquées contre ces surfaces (61-64).

La pièce protectrice (10) est réalisée en matériau déformable de sorte à être destinée à être retirée par l'intérieur de la canalisation (2). La pièce (10) repliée présente un diamètre extérieur qui est inférieur au diamètre intérieur de la canalisation (2). La pièce (10) présente un comportement élastomérique, avec capacité de déformation pour le retrait, et retour aux forme et dimensions initiales après retrait.

De préférence, la pièce protectrice (10) est réalisée en matériau polyuréthane Courbhane (marque déposée).

Avantageusement, la pièce protectrice (10) peut comporter des zones amincies pour faciliter sa déformation, son pliage et son retrait. Les zones amincies peuvent être formées sur la partie périphérique (30) et/ou sur la partie centrale (20). Sur l'exemple des figures, les zones amincies comprennent des lignes (35) réparties dans des plans axiaux (P30) sur la partie périphérique (30), ainsi que les angles de jonction (36) entre les jupes (32, 33) et les angles de fonction (37) entre les jupes (33, 34). En variante non représentée, les zones amincies peuvent comprendre des sections amincies formées sur les rayons (21) de la partie centrale (20).

La pièce d'ancrage (40) constitue des moyens d'accroche pour accrocher des moyens de traction à la pièce (10) en vue de son retrait. La pièce d'ancrage (40) est solidarisée au moyeu (23), par exemple par surmoulage. Sur l'exemple des figures, la pièce d'ancrage (40) comporte une portion supérieure (41) munie d'un orifice de fixation supérieur, une portion inférieure (42) munie d'un orifice de fixation inférieur, et une portion médiane (43) plus mince que les portions (41, 42) et munie de plusieurs orifices (44) de réception de la matière du moyeu (23).

Les moyens de traction peuvent comprendre un crochet métallique (50) fixé à la portion supérieure (41) de la pièce d'ancrage (40), et une corde ou sangle fixée au crochet (50) et remontant par l'intérieur de la canalisation (2), pour retirer la pièce protectrice (10) par l'intérieur. Si besoin, un crochet (50) et une corde peuvent être fixées à la portion inférieure (42) de la pièce d'ancrage (40), pour retirer la pièce protectrice (10) par l'extérieur.

La pièce d'ancrage (40) peut être réalisée en matériau plus dur que la pièce protectrice (10), afin de mieux supporter les efforts de traction. De préférence, la pièce d'ancrage (40) est réalisée en matériau polyuréthane, plus dur que la pièce protectrice (10). Encore de préférence, la pièce d'ancrage (40) peut être réalisée en matériau polyuréthane Courbhane (marque déposée).

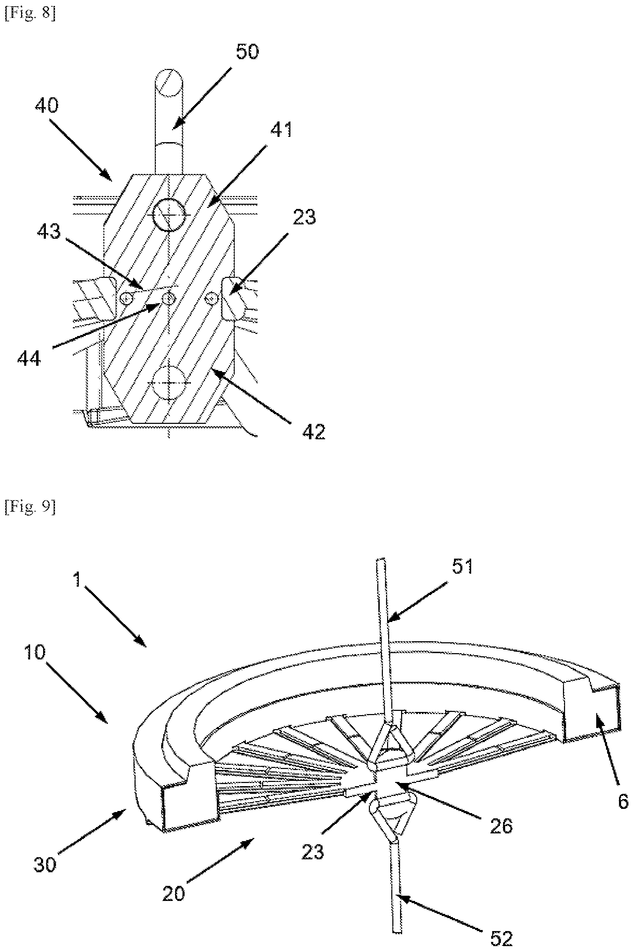

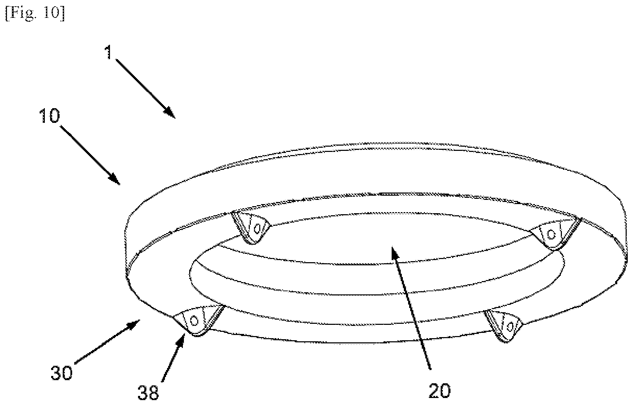

D'autres modes de réalisation d'un système de protection (1) conforme à l'invention sont montrés aux figures 9 et 10. Certains éléments constitutifs sont comparables à ceux du premier mode de réalisation décrit plus haut et, dans un but de simplification, portent les mêmes références numériques.

La figure 9 montre un système de protection (1) constitué d'une unique pièce protectrice (10). Le centre du moyeu (23) comporte un organe d'ancrage (26) solidaire de la partie centrale (20). Deux cordes (51, 52) ou sangles peuvent être fixées à l'organe (26), respectivement en dessus et en dessous. Une première corde (51) remonte par la canalisation (2) pour permettre de récupérer la pièce protectrice (10) depuis l'intérieur. Une seconde corde (52) peut être fixée sous la pièce protectrice (10) pour la retirer depuis l'extérieur, si besoin.

La figure 10 montre un système de protection (1) constitué d'une unique pièce protectrice, dont la partie centrale (20) est complètement évidée. La partie périphérique (30) comporte quatre points d'accroche (38) prévus pour la fixation de cordes ou sangles. Ces cordes remontent par la canalisation (2) pour permettre de récupérer la pièce (10) par l'intérieur. En alternative, les cordes peuvent rester en attente sous la pièce (10) pour un retrait par un véhicule sous-marin.

La pièce (10) est généralement monobloc, de sorte que le système (1) est principalement réalisé à partir d'un seul matériau.

Par ailleurs, le système de protection (1) et la canalisation (2) peuvent être conformés différemment des figures 1 à 10 sans sortir du cadre de l'invention, qui est définie par les revendications. En outre, les caractéristiques techniques des différents modes de réalisation et variantes mentionnés ci-dessus peuvent être, en totalité ou pour certaines d'entre elles, combinées entre elles. Ainsi, le système (1) peut être adapté en termes de coût, de fonctionnalités et de performance.

## Revendications

1. Système (1) de protection de l'embouchure (4) d'une canalisation (2), le système (1) comprenant une pièce protectrice (10) ayant une partie centrale (20) munie d'au moins une ouverture (22) pour le passage d'un fluide (F) circulant dans la canalisation (2), et une partie périphérique (30) munie de jupes (31, 32, 33, 34) prévues pour protéger des surfaces (61, 62, 63, 64) de l'embouchure (4) contre le fluide (F), la pièce protectrice (10) étant réalisée en matériau déformable, afin d'être apte à être retirée par l'intérieur de la canalisation (2), **caractérisé en ce que** la partie centrale (20) a une forme de roue, avec au moins deux rayons (21) connectés à la partie périphérique (30) et séparés par des ouvertures (22) de passage de fluide (F), et la partie centrale comprend également un moyeu central (23) et les rayons (21) s'étendent entre le moyeu central (23) et la partie périphérique (30).

2. Système (1) selon la revendication 1, **caractérisé en ce que** la pièce (10) comporte des zones amincies (35, 36, 37) pour faciliter la déformation et le retrait.

3. Système (1) selon la revendication 1, **caractérisé en ce que** les rayons (21) ont une section cylindrique.

4. Système (1) selon la revendication 1 ou 3, **caractérisé en ce que** les rayons (21) sont inclinés par rapport à un plan radial (P10) de la pièce protectrice (10).

5. Système (1) selon l'une quelconque des revendications précédentes, **caractérisé en ce que** la partie périphérique (30) est munie d'au moins trois jupes (31, 32, 33) prévues pour protéger respectivement une surface intérieure (61), une surface frontale (62) et une surface extérieure (63) de l'embouchure (4) de la conduite (2).

6. Système (1) selon l'une quelconque des revendications précédentes, **caractérisé en ce que** le système (1) comprend des moyens d'accroche (26 ; 38 ; 40) conçus pour accrocher des moyens de traction à la pièce protectrice (10) en vue de son retrait.

7. Système (1) selon la revendication 6, **caractérisé en ce que** les moyens d'accroche (26 ; 38 ; 40) sont conçus pour accrocher des moyens de traction à la pièce protectrice (10) par-dessus et par-dessous, en vue de son retrait sélectivement par l'intérieur ou par l'extérieur de la canalisation (2).

8. Système (1) selon l'une quelconque des revendications précédentes, **caractérisé en ce que** la pièce protectrice (10) est en matériau polyuréthane.

9. Procédé de mise en œuvre d'un système de protection (1) selon l'une quelconque des revendications 1 à 8, **caractérisé en ce que** le procédé comprend une étape de montage de la pièce protectrice (10) sur l'embouchure (4) de la canalisation (2), et une étape de retrait de la pièce protectrice (10), sélectivement par l'intérieur ou par l'extérieur de la canalisation (2).

## Patentansprüche

1. Schutzsystem (1) für die Mündung (4) einer Rohrleitung (2), wobei das System (1) ein Schutzteil (10) umfasst, das einen zentralen Teil (20) mit mindestens einer Öffnung (22) für den Durchgang eines in der Rohrleitung (2) zirkulierenden Fluids (F) und einen Randteil (30) mit Röcken (31, 32, 33, 34) aufweist, die dazu vorgesehen sind, die Oberflächen (61, 62, 63, 64) der Mündung (4) gegen das Fluid (F) zu schützen, wobei das Schutzteil (10) aus einem verformbaren Material hergestellt ist, um von innen aus der Rohrleitung (2) entfernt werden zu können, **dadurch gekennzeichnet, dass** der zentrale Teil (20) die Form eines Rades hat, mit mindestens zwei Speichen (21), die mit dem Randteil (30) verbunden sind und durch Öffnungen (22) für den Durchgang des Fluids (F) getrennt sind, und der zentrale Teil umfasst auch eine zentrale Nabe (23) und die Speichen (21) erstrecken sich zwischen der zentralen Nabe (23) und dem Randteil (30).

2. System (1) nach Anspruch 1, **dadurch gekennzeichnet, dass** das Teil (10) dünnere Zonen (35, 36, 37) aufweist, um die Verformung und das Entfernen zu erleichtern.

3. System (1) nach Anspruch 1, **dadurch gekennzeichnet, dass** die Speichen (21) einen zylindrischen Querschnitt haben.

4. System (1) nach Anspruch 1 oder 3, **dadurch gekennzeichnet, dass** die Speichen (21) gegenüber einer radialen Ebene (P10) des Schutzteils (10) geneigt sind.

5. System (1) nach einem der vorhergehenden Ansprüche, **dadurch gekennzeichnet, dass** der Randteil (30) mit mindestens drei Röcken (31, 32, 33) versehen ist, die jeweils eine innere Oberfläche (61), eine Frontfläche (62) und eine äußere Oberfläche (63) der Mündung (4) der Rohrleitung (2) schützen sollen.

6. System (1) nach einem der vorhergehenden Ansprüche, **dadurch gekennzeichnet, dass** das System (1) Befestigungsmittel (26; 38; 40) umfasst, die dazu bestimmt sind, Zugmittel am Schutzteil (10) zur Entfernung zu befestigen.

7. System (1) nach Anspruch 6, **dadurch gekennzeichnet, dass** die Befestigungsmittel (26; 38; 40) dazu bestimmt sind, Zugmittel am Schutzteil (10) oben und unten zu befestigen, um es selektiv von innen oder außen aus der Rohrleitung (2) zu entfernen.

8. System (1) nach einem der vorhergehenden Ansprüche, **dadurch gekennzeichnet, dass** das Schutzteil (10) aus Polyurethan-Material besteht.

9. Verfahren zur Implementierung eines Schutzsystems (1) nach einem der Ansprüche 1 bis 8, **dadurch gekennzeichnet, dass** das Verfahren einen Schritt zum Montieren des Schutzteils (10) auf der Mündung (4) der Rohrleitung (2) und einen Schritt zum Entfernen des Schutzteils (10) selektiv von innen oder außen aus der Rohrleitung (2) umfasst.

## Claims

1. A system (1) for protecting the mouth (4) of a pipe (2), the system (1) comprising a protective part (10) that has a central portion (20) provided with at least one opening (22) for the passage of a fluid (F) circulating in the pipe (2), and a peripheral portion (30) provided with skirts (31, 32, 33, 34) provided to protect surfaces (61, 62, 63, 64) of the mouth (4) from the fluid (F), the protective part (10) being made of a deformable material, so as to be able to be removed from the interior of the pipe (2), **characterised in that** the central portion (20) is wheel-shaped, with at least two radii (21) that are connected to the peripheral portion (30) and separated by openings (22) for the passage of fluid (F), and the central portion comprises also a central hub (23) and the radii (21) extend between the central hub (23) and the peripheral portion (30).

2. The system (1) according to any one of the preceding claims, **characterised in that** the piece (10) has thinned areas (35, 36, 37) in order to facilitate deformation and removal.

3. The system (1) according to claim 1, **characterised in that** the radii (21) have a cylindrical cross-section.

4. The system (1) according to claim 1 or 3, **characterised in that** the radii (21) are inclined relative to a radial plane (P10) of the protective part (10).

5. The system (1) according to any one of the preceding claims, **characterised in that** the peripheral portion (30) is provided with at least three skirts (31, 32, 33) in order to protect, respectively, an internal surface (61), a front surface (62) and an external surface (63) of the mouth (4) of the pipe (2).

6. The system (1) as claimed in any one of the preceding claims, **characterised in that** the system (1) comprises attaching means (26; 38; 40) designed to attach tensile means to the protective part (10), so that it may be removed.

7. The system (1) according to claim 7, **characterised in that** the attaching means (26; 38; 40) are designed to attach tensile means to the protective part (10) from above and below, so that it may be removed selectively from the interior or exterior of the pipe (2).

8. The system (1) according to any one of the preceding claims, **characterised in that** the protective part (10) is made of a polyurethane material.

9. The system of implementing a protection system (1) according to any one of claims 1 to 8, **characterised in that** the method comprises a step for assembling the protective part (10) onto the mouth (4) of the pipe (2), and a step for removing the protective part (10) selectively from the interior or exterior of the pipe (2).
